(19) Europäisches Patentamt
European Patent Office
Office européen des brevets

(11) Publication number: **0 167 279**
**A1**

(12) # EUROPEAN PATENT APPLICATION

(21) Application number: 85303847.9

(22) Date of filing: 31.05.85

(51) Int. Cl.[4]: **H 01 M 6/14**
H 01 M 6/16, H 01 M 4/40
//H01M4/38, H01M4/48,
H01M4/58

(30) Priority: 07.06.84 US 618242

(43) Date of publication of application:
08.01.86 Bulletin 86/2

(84) Designated Contracting States:
AT BE CH DE FR GB IT LI LU NL SE

(71) Applicant: AMOCO CORPORATION
200 East Randolph Drive
Chicago Illinois 60601(US)

(72) Inventor: Connolly, John Francis
625 Lake Road
Glen Ellyn Illinois 60137(US)

(72) Inventor: Thrash, Robert James
571 Iroquois Trail
Carol Stream Illinois 60188(US)

(74) Representative: Laredo, Jack Joseph et al,
Elkington and Fife High Holborn House 52/54 High Holborn
London, WC1V 6SH(GB)

(54) **Etched metal electrodes and their use in nonaqueous electrochemical cells.**

(57) Active metal electrodes for use in non-aqueous electrochemical cells are improved by etching with hexamethylphosphoramide.

EP 0 167 279 A1

# ETCHED METAL ELECTRODES AND THEIR USE IN NONAQUEOUS ELECTROCHEMICAL CELLS

## Background of the Invention

### 1. Field of the Invention.

This invention relates to a method for improving the properties of active metal electrodes for use in non-aqueous electrochemical cells. More particularly, it relates to a process for the modification of conventional active metal electrodes by etching with hexamethylphosphoramide.

### 2. Description of the Prior Art.

A substantial amount of interest has recently been centered on the development of ambient temperature, high energy density, electrochemical cells which are light in weight and capable of providing a higher voltage than conventional cells such as nickel-cadmium and lead-acid systems or alkaline cells having zinc anodes. The high energy density cell systems which are currently of interest typically involve the use of active metals (metals above hydrogen in the electromotive series of elements which are unstable in an aqueous environment) as anodes in combination with nonaqueous electrolytes. As used herein, "nonaqueous" is intended to mean substantially free of water.

In conventional electrochemical cells, cathode depolarizers are used in a form which will permit an intimate and maximum contact with an external electrical circuit, such as a set of wires connecting the electrodes of a cell, while also effecting a physical separation of the cathode depolarizer from the anode. In such cells, the cathode depolarizer is generally an insoluble, finely divided solid which is either admixed with or used as a

coating over an inert conducting material, such as nickel, graphite or carbon rod, which serves as a current collector or cathode. The physical separation of the cathode depolarizer from the anode is necessary to prevent a direct chemical reaction between the anode material and the cathode depolarizer which would result in self-discharge of the cell.

Until recently, it was generally believed that a direct physical contact between the cathode depolarizer and the anode could not be permitted within an electrochemical cell. It has been discovered, however, that certain cathode depolarizers do not react chemically to any appreciable extent with active metal anodes at the interface between the anode and the cathode depolarizer. Accordingly, with materials of this type, it is possible to construct an electrochemical cell wherein an active metal anode is in direct contact with the cathode depolarizer. For example, U.S. Patent No. 3,567,515 issued to Maricle et al. on March 2, 1971, discloses the use of sulfur dioxide as a cathode depolarizer in such a cell. Similarly, U.S. Patent No. 3,926,669 issued to Auborn on Dec. 16, 1975, discloses that certain liquid inorganic oxyhalides and thiohalides, such as thionyl chloride, sulfuryl chloride and phosphorus oxychloride, can be utilized as cathode depolarizers in such a cell.

Consistent with the disclosure of Maricle et al. in the above-mentioned U.S. Patent No. 3,567,515, ultra-pure lithium electrodes prepared by vapor deposition of lithium on a glass substrate are stable when placed in direct contact with an electrolyte which comprises sulfur dioxide and in which the dithionite discharge product is soluble. However, we have found that a relatively rapid self-discharge usually occurs when the lithium electrode is fabricated from bulk samples of commercially supplied lithium. For example, when commercial lithium foil is placed in an electrolyte which comprises sulfur dioxide and in which the dithionite discharge product is soluble

(dithionite anion is the sulfur dioxide reduction product), one usually observes one or more spots appearing on the lithium surface from which a red to black colored material is released. In some cases, only a few such spots will appear. More typically, however, large areas of the lithium electrode will be covered with such spots. When the lithium electrode is coupled with a carbon cathode, the open circuit voltage of the resulting electrochemical cell decays rapidly as a consequence of the self-discharge process. This self-discharge represents a major obstacle to the construction of a satisfactory electrochemical cell which comprises an active metal anode, and an electrolyte solution which comprises sulfur dioxide and in which the dithionite discharge product is soluble. The prior art fails to disclose any method for either the control or prevention of this self-discharge.

High surface area active metal electrodes are highly desirable for use in high energy density cell systems for a variety of reasons. For example, high surface area electrodes provide higher currents and, accordingly, permit the delivery of greater power from both primary (nonrechargeable) and secondary (rechargeable) cells during discharge. In those cases wherein an insoluble product is produced during discharge and deposited on the active metal electrode, high surface area electrodes provide a greater discharge capacity before the active surface becomes coated. Further, high surface area electrodes are generally porous in nature. In rechargeable secondary cells, this porous nature permits the retention of any insoluble discharge product within the pores and thus facilitates the recharge process. This retention of discharge product near the electrode in secondary cells serves to reduce electrode shape change during recharge, thereby extending cycle life.

The alkali metals and, to a lesser degree, calcium, strontium, barium, europium and ytterbium are soluble in liquid ammonia. The resulting solutions are blue in

color when dilute and are bronze or metallic appearing at metal concentrations of about 3 molar or above. In the dilute solutions, it is generally believed that the metal is dissociated into solvated metal ions and electrons. The more concentrated bronze appearing solutions possess physical properties, such as a metallic luster and an exceedingly high electrical conductivity, which resemble those of liquid metals. The foregoing metals are also soluble, to varying degrees, in amines. In addition, it is known that lithium, sodium and potassium are soluble in hexamethylphosphoramide, a compound which has the formula $[(CH_3)_2N]_3PO$.

A procedure for the preparation of alkali metal and alkaline earth metal dispersions in hydrocarbon liquids has been developed which is based on the solubility of these metals in liquid ammonia. This procedure involves dispersing an ammonia solution of the metal in a hydrocarbon liquid and allowing the ammonia to evaporate. Similarly, C. M. Stupak disclosed at the Colloque Weyl (June 26-July 1, 1983, at Pacific Grove, California) that lithium can be purified by filtering a saturated ammonia solution of this metal and recovering the metal by evaporation of the ammonia.

Various alcohols, typically in combination with an inert hydrocarbon diluent, have been utilized to chemically polish and etch alkali metals. A survey of the use of various alcohols to polish lithium, sodium and potassium has been reported by R. N. Castellano et al., J. Electrochem. Soc.: Solid State Science, 118, 653 (1971).

## Summary of the Invention

The present invention is directed to the discovery that the properties of certain active metal electrodes for use in electrochemical cells can be improved by etching these electrodes with liquid hexamethylphosphoramide. More specifically, it has been found that such

etching of an electrode which is comprised of a metal selected from the group consisting of lithium, sodium and potassium serves to prevent or control the self-discharge of the electrode when it is placed in contact with a cathode depolarizer with which it should be compatible. In addition, it is believed that the surface area of such an electrode can be increased by contact with liquid hexamethylphosphoramide.

One embodiment of the invention is an electrochemical cell comprising in combination: (a) a cathode; (b) a nonaqueous, conductive, liquid electrolyte which comprises a cathode depolarizer; and (c) a solid electrode comprising at least one metal selected from the group consisting of lithium, sodium and potassium, said electrode having a surface which has been modified by contact with a liquid etching agent comprising hexamethyl phosphoramide.

Another embodiment of the invention is an electrochemical cell comprising in combination: (a) a cathode; (b) a nonaqueous, conductive, liquid electrolyte which comprises liquid sulfur dioxide having at least one electrolyte salt dissolved therein which is selected from the group consisting of quaternary ammonium salts , phosphonium salts, pyridinium salts and arsonium salts; and (c) a solid electrode comprising lithium, said electrode having a surface which has been modified by contact with a liquid etching agent comprising hexamethylphosphoramide.

An object of the invention is to provide an improved electrochemical cell.

Another object of this invention is to provide an improved active metal electrode for use in nonaqueous electrochemical cells.

Another object of this invention is to provide an active metal electrode which has a reduced tendency to self-discharge when combined with a cathode depolarizer with which it should be compatible.

A further object of this invention is to provide an active metal electrode having an increased surface area.

## Detailed Description of the Invention

We have found that certain active metal electrodes for use in nonaqueous electrochemical cells can be improved by etching with hexamethylphosphoramide. Suitable active metal electrodes for use in the practice of this invention comprise at least one metal selected from the group consisting of lithium, sodium and potassium. All of these metals are characterized by at least some solubility in hexamethylphosphoramide. In view of this solubility, hexamethylphosphoramide has the ability to modify the electrode surface by dissolving surface layers of the metal. Lithium and sodium are preferred metals for use as active metal electrodes in view of their high electrode potential, low equivalent weight and high solubility in hexamethylphosphoramide. Lithium is highly preferred since it has the ability in an electrochemical cell to provide the highest performance in watt-hours per pound of all known active metals.

If desired, a substantially inert liquid diluent can be utilized in combination with the hexamethylphosphoramide. This diluent must, of course, be substantially inert with respect to both the active metal electrode and the hexamethylphosphoramide. Suitable diluents include, but are not limited to, ethers, such as tetrahydrofuran, diethyl ether and ethylene glycol dimethyl ether. Ordinarily, however, it is preferred to utilize the hexamethylphosphoramide without any diluent since the diluent usually has the undesirable effect of reducing the solubility of the active metal of the electrode.

In the practice of this invention, the active metal electrode is contacted with an amount of an etching agent comprising hexamethylphosphoramide for a period of time and at a temperature which are effective to result in a

modification of the surface of the electrode. This contacting serves to remove at least some metal, and preferably a minor amount of metal, from the electrode surface as a consequence of the metal dissolving in the etching agent. A preferred method of contacting the active metal electrode with the etching agent involves a simple dipping of the electrode in the etching agent.

After modification of the electrode surface by the etching agent, the electrode is removed from contact with the etching agent. Residual traces of the etching agent can be removed from the electrode after such contacting by conventional techniques, such as evaporation or washing with a substantially inert solvent. Suitable solvents for this purpose include, but are not limited to, ethers, such as tetrahydrofuran, diethyl ether and ethylene glycol dimethyl ether. Techniques which involve wiping the electrode surface are not generally preferred because of the possibility that impurities may become attached to the electrode surface.

Although the subject invention is not to be so limited, it is believed that commercially supplied bulk samples of active metals carry significant amounts of surface impurities. In addition, the fabrication of these metals into electrodes for use in electrochemical cells carries with it the probability that additional impurities will be attached to the surface of the resulting electrode. For example, mere contact with a cutting tool can serve to contaminate the electrode surface. When an active metal electrode is utilized in an electrochemical cell wherein it is in direct contact with a cathode depolarizer, it is believed that particulate surface impurities can act as small cathodes which are in direct electrical contact with the active metal electrode. As a consequence, self-discharge can take place. The etching agent of this invention is believed to control this self-discharge process by dissolving a surface layer of metal from the electrode and thereby removing

any adhering contaminants or impurities.

The treatment of lithium electrodes with hexamethylphosphoramide in accordance with this invention serves to substantially prevent the self-discharge of about 80% of the treated electrodes when they are placed in an electrolyte which comprises sulfur dioxide and in which the dithionite discharge product is soluble. In addition, the extent of self-discharge in the remaining 20% of such treated electrodes is substantially reduced in comparison with untreated lithium electrodes.

In addition to controlling or preventing electrode self-discharge, treatment of an active metal electrode with an etching agent in accordance with this invention is believed to have the additional beneficial effect of enhancing the surface area of the treated electrode. Although the invention is not to be so limited, it is believed that the electrode surface is selectively etched at crystal boundaries, thereby resulting in a roughened surface.

The active metal electrode of the electrochemical cell of this invention can be constructed in any of the conventional forms, such as foil, plates, rods, films, powders, compacts or screens, and can be used alone or in combination with either conducting or nonconducting substrates. However, the use of a conducting substrate is not usually preferred since a simultaneous contact of both substrate and active metal with the electrolyte can cause self-discharge of the electrode.

The cathode of the electrochemical cell can be constructed of any material which is electrically conducting and is substantially inert to the electrolyte system. In addition, the cathode material is desirably catalytic with respect to electroreduction of the cathode depolarizer. Preferred materials include metals of the platinum group family, consisting of platinum, iridium, osmium, palladium, rhodium and ruthenium; carbon in any of its common electrode forms such as sintered, compacted or

powdered graphite or carbon rod; iron in its various forms, particularly as stainless steel; titanium, nickel, silver, mercury, lead and gold. Less preferred materials are metals of the families of vanadium, chromium and manganese [Groups 5b, 6b and 7b of the Periodic Table of Elements (Handbook of Chemistry and Physics, 57th ed., 1976-77, P. B-4)]; zirconium, cobalt, copper, zinc, cadmium, germanium, tin, antimony and bismuth; certain nitrides such as boron nitride; and semi-conductors such as silicon. These materials can be used in any of the forms which are conventional in the art, such as rods, compacts, powders, pastes and the like.

The electrolyte for use in the electrochemical cell of this invention comprises a cathode depolarizer which is electrochemically reduced at the surface of the cathode during discharge of the electrochemical cell. Suitable cathode depolarizers include all materials which are stable when in direct contact with the active metal anode and are also capable of being electrochemically reduced at the cathode during discharge of the electrochemical cell. Suitable cathode depolarizers include, but are not limited to, sulfur dioxide and covalent inorganic oxyhalides and thiohalides. Examples of such oxyhalides and thiohalides include phosphorus oxychloride, monofluorophosphoryl dichloride, monobromophosphoryl dichloride, phosphorus oxybromide, thiophosphoryl chloride, thiophosphoryl bromide, thionyl chloride, thionyl bromide, sulfuryl chloride, selenium oxychloride and mixtures thereof. Preferred cathode depolarizers include sulfur dioxide, thionyl chloride, sulfuryl chloride and phosphorus oxychloride.

In the absence of any surface contamination on the active metal electrode which can initiate self-discharge, the cathode depolarizer is stable when in contact with this electrode. Although the reasons for this are not well understood, it is believed that the active metal electrode reacts with a small amount of the cathode depolarizer to form a thin film of the reaction product on the electrode surface which serves to prevent any further molecules of cathode depolarizer from reaching the active metal of the electrode. For example, in the case of a lithium anode and sulfur dioxide as the cathode depolarizer, it is believed that the anode is passivated by the formation of a thin film of lithium dithionite ($Li_2S_2O_4$) which then prevents further sulfur dioxide molecules from reaching the lithium anode surface and thereby prevents self-discharge. Nevertheless, this thin film permits electrochemical oxidation and reduction of the lithium anode to take place during operation of the cell by passage of lithium cations through the film. At the same time, sulfur dioxide reduction products are formed at the cathode current collector during discharge of the cell.

The electrolyte for use in the electrochemical cell of this invention preferably comprises a liquid cathode depolarizer having dissolved therein at least one, and ordinarily more than one, electrolyte salt which is substantially inert to the other cell components. Such salts are selected and utilized in amounts which are effective to provide an adequate conductivity for efficient operation of the electrochemical cell. Suitable electrolyte salts include, but are not limited to, alkali metal salts, alkaline earth metal salts, quaternary ammonium salts, phosphonium salts, pyridinium salts and arsonium salts. However, quaternary ammonium salts, phosphonium salts, pyridinium salts and arsonium salts are preferred, and quaternary ammonium salts and phosphonium salts are highly preferred. These preferred electrolyte salts usually have the ability to render the cell's discharge product relatively soluble in the electrolyte since they contain cations which typically form a soluble salt upon combination with the anionic discharge product which is formed at the cathode. For example, when the electrolyte comprises liquid sulfur dioxide having one or more of these preferred salts dissolved

therein, the dithionite discharge product of the electrochemical cell is quite soluble in the electrolyte.

Various combinations of electrolyte salts comprising at least one material selected from the group consisting of quaternary ammonium salts, phosphonium salts, pyridinium salts and arsonium salts in combination with one or more alkali metal salts or alkaline earth metal salts are frequently useful. A preferred combination of electrolyte salts comprises the combination of at least one quaternary ammonium salt with one or more lithium salts. Examples of suitable lithium salts include lithium perchlorate, lithium dithionite, lithium sulfate, lithium tetrafluoroborate, lithium hexafluorophosphate, lithium bromide and lithium chloride.

Quaternary ammonium salts are highly suitable for use as electrolyte salts in the practice of this invention. Preferred quaternary ammonium salts are of the formula:

$$\begin{array}{c} R^2 \\ | \\ R^1 - N^+ - R^3 \\ | \\ R^4 \end{array} \qquad X^-$$

wherein $R^1$, $R^2$, $R^3$ and $R^4$ are independently selected from the group consisting of hydrocarbyl groups containing from 1 to 20 carbon atoms, and $X^-$ is selected from the group consisting of perchlorate, tetrafluoroborate, hexafluorophosphate, dithionite, sulfate, phosphate, chloride, bromide, iodide and fluoride. More preferably, $R^1$, $R^2$, $R^3$ and $R^4$ are independently selected from the group consisting of alkyl groups having from 1 to 10 carbon atoms, and $X^-$ is selected from the group consisting of perchlorate, tetrafluoroborate, hexafluorophosphate, dithionite, sulfate and bromide. Examples of suitable quaternary ammonium salts include tetrabutylammonium perchlorate, tetrahexylammonium perchlorate, tetramethylammonium tetrafluoroborate, and tetrapropylammonium hexafluorophosphate.

Phosphonium salts are also very suitable for use as electrolyte salts in the practice of this invention, and preferred materials are of the formula:

$$\begin{array}{c} R^2 \\ | \\ R^1 - P^+ - R^3 \\ | \\ R^4 \end{array} \qquad X^-$$

wherein $R^1$, $R^2$, $R^3$ and $R^4$ are independently selected from the group consisting of hydrocarbyl groups containing from 1 to 20 carbon atoms, and $X^-$ is selected from the group consisting of perchlorate, tetrafluoroborate, hexafluorophosphate, dithionite, sulfate, phosphate, chloride, bromide, iodide and fluoride. More preferably, $R^1$, $R^2$, $R^3$ and $R^4$ are independently selected from the group consisting of alkyl groups of from 1 to 10 carbon atoms, and aryl and alkyl-substituted aryl groups of from 6 to 12 carbon atoms; and $X^-$ is selected from the group consisting of perchlorate, tetrafluoroborate, hexafluorophosphate, dithionite, sulfate and bromide. Examples of suitable phosphonium salts include tetrabutylphosphonium tetrafluoroborate, tetraphenylphosphonium perchlorate, and tetraphenylphosphonium hexafluorophosphate.

In addition to the cathode depolarizer and electrolyte salt or salts, the electrolyte for use in the electrochemical cell of this invention can additionally comprise one or more liquid organic or inorganic solvents or cosolvents which lack acidic hydrogen atoms and contain one or more atoms having at least one unshared pair of electrons. For the purposes hereof, "acidic hydrogen atoms" are those which are capable of being abstracted by the active metal electrode. However, strongly basic cosolvents such as amines are not generally desirable.

More specifically, suitable solvents and cosolvents are organic or inorganic liquids which contain at least

one element which is selected from Groups 3a, 4a, 5a and 6a of the Periodic Table [Handbook of Chemistry and Physics, 57th ed. (1976-77), p. B-4]. Preferred elements from this group include, for example, boron, silicon, nitrogen, phosphorus, oxygen and sulfur as well as combinations of these elements. Organic solvents which contain two or more atoms of such elements in each molecule are particularly suitable.

Preferred liquid organic compounds for use as a solvent or cosolvent in the practice of this invention include, but are not limited to, trialkyl borates, boronic acid esters, borinic acid esters, tetraalkyl silicates, alkylalkoxyl silanes, nitroalkanes, alkylnitriles, dialkyl amides, lactams, tetraalkyl ureas, acetals, ketals, monocarboxylic acid esters, orthoesters, lactones, dialkyl carbonates, alkylene carbonates, orthocarbonates, monoethers, polyethers, monocarboxylic acid anhydrides, dialkyl sulfates, dialkyl sulfites, alkylene sulfites, and sulfones. Specific examples include triethyl borate, diethyl methylboronate, methyl diethylborinate, tetramethyl silicate, trimethoxymethylsilane, nitroethane, acetonitrile, dimethylformamide, 1-methyl-2-pyrrolidinone, tetramethyl urea, 1,1-diethoxy ethane, 2,2-dimethyoxypropane, ethyl acetate, trimethyl orthoformate, γ-butyrolactone, dimethyl carbonate, ethylene carbonate, tetramethyl orthocarbonate, diethyl ether, tetrahydrofuran, ethylene glycol dimethyl ether, acetic anhydride, dimethyl sulfate, dimethyl sulfite, ethylene sulfite, and tetramethylene sulfone.

The following examples are intended only to illustrate the invention and are not to be construed as imposing limitations on it.

## EXAMPLE I

Two lithium electrodes were prepared according to the following procedure in a dri-box manufactured by

Vacuum Atmospheres Co., which contained an argon atmosphere. Two strips of lithium foil, one 11.5 cm long (Substrate A) and the other 10.5 cm long, were cut from a roll of foil obtained from Foote Mineral Co. Both strips were 1.0 cm wide and 1.02 mm thick. A piece of lithium (Foote Mineral Co.) 1.5 cm long x 1.0 cm wide x 0.25 mm thick was pressure welded, with an overlap of 0.5 cm, to one end of the 10.5 cm long lithium strip. This welding step had the effect of adding a 1.0 cm extension of 0.25 mm thick lithium to the 10.5 cm strip and afforded Substrate B.

One end of Substrate A was dipped to a depth of 2 cm into unstirred hexamethylphosphoramide (Aldrich Chemical Co.) at a temperature of 24°C for 24 minutes with occasional brushing of the lithium edges with a camel's hair brush. The resulting etched surface of the substrate was then washed with a stream of hexamethylphosphoramide to dislodge any loose material. The substrate was subsequently inverted and residual hexamethylphosphoramide flowing down onto the unetched area was removed by blotting with tissue paper. The 0.25 mm thick end of Substrate B was etched with hexamethylphosphoramide in the same manner as Substrate A except that the immersion time was only 12 minutes. The resulting etched substrates, clamped in an inverted position, were allowed to stand overnight in an argon atmosphere which contained 1000 ppm of nitrogen (a subsequent experiment indicated that the presence of this nitrogen had no effect). The etched areas of the substrates had some pockmarks and a crystalline appearance. In addition, the 0.25 mm thick end of Substrate B had a thickness of 0.17 mm after etching.

The two etched lithium substrates were dipped in molten wax (the wax was held at a temperature close to its melting point of about 60°C except for the top layer of wax which was at a temperature about 5°C above the melting point) to mask all but a 0.5 cm length at the

etched end of each substrate. In all of the foregoing operations, care was taken to avoid touching the etched area of the electrodes.

## EXAMPLE II

The two lithium electrodes prepared as described in Example I were incorporated into an electrochemical cell (the electrode derived from Substrate A was used as a reference electrode while that derived from Substrate B was used as the anode) which also included two porous carbon electrodes (one as a cathode and the other as a reference electrode). The electrolyte was a liquid sulfur dioxide solution which was 0.2 molar in tetrabutylammonium perchlorate and saturated (0.035 molar) in lithium perchlorate. Immediately after introducing the electrolyte, the open circuit voltage (OCV), with respect to carbon, was 2.94 volts for the lithium anode and 2.87 volts for the lithium reference electrode. Subsequently, the OCV for both electrodes rose to 3.05 volts and then stabilized at 2.95 volts after the carbon electrodes had been slightly discharged. Each lithium electrode initially showed one or two tiny red areas (less than 1 $mm^2$ in size) of self-discharge, but these disappeared after a short time. After an initial five hour discharge at 0.5 $mA/cm^2$, the lithium anode was evaluated by subjecting it to a series of charge/discharge cycles where each cycle consisted of a one hour discharge period followed by a one hour charge period. Fifty-one cycles were carried out at a current of 0.5 $mA/cm^2$ (0.5 mA total current). Subsequently, an additional twelve cycles were carried out at a current of 0.25 $mA/cm^2$. Electrode polarization averaged about 30 mV (omitting an additional 30 mV of IR drop) during these cycles. After the last cycle, the anode polarized over 200 mV on discharge and was considered to have failed. It had several holes in it at this point and the total amount of cycling corresponded to 2.0

turnovers of the electrochemically active lithium. No trace of self-discharge was observed during the cycling experiments.

EXAMPLE III

An electrochemical cell was prepared as described in Example II with lithium electrodes which were prepared according to Example I except that the etching with hexamethylphosphoramide was omitted. Open circuit voltages of 2.9 volts and a fairly small amount of self-discharge were initially observed. However, massive amounts of self-discharge and low open circuit voltages (less than 1.0 volt) developed after a few days of cycling and standing at open circuit.

CLAIMS

1. An electrochemical cell comprising in combination:

(a) a cathode;

(b) a nonaqueous, conductive, liquid electrolyte which comprises a cathode depolarizer; and

(c) a solid electrode comprising at least one metal selected from the group consisting of lithium, sodium and potassium, said electrode having a surface which has been modified by contact with a liquid agent comprising hexamethylphosphoramide and is performed prior to contacting said electrode with said liquid electrolyte solution.

2. The electrochemical cell as set forth in claim 1 wherein said electrode comprises lithium.

3. The electrochemical cell as set forth in claim 1 wherein said cathode depolarizer comprises at least one material selected from the group consisting of sulfur dioxide, oxyhalides and thiohalides, wherein said oxyhalides and thiohalides are covalent inorganic compounds.

4. The electrochemical cell as set forth in claim 3 wherein said cathode depolarizer comprises a material selected from the group consisting of sulfur dioxide, thionyl chloride, sulfuryl chloride and phosphorus oxychloride.

5. The electrochemical cell as set forth in claim 3 wherein said cathode depolarizer comprises sulfur dioxide.

6. The electrochemical cell as set forth in claim 1 wherein said electrolyte comprises a liquid cathode depolarizer having at least one electrolyte salt dissolved therein which is substantially inert to said cathode depolarizer and said electrode.

7. The electrochemical cell as set forth in claim 6 wherein said electrolyte salt comprises a quaternary ammonium salt of the formula:

$$\begin{array}{c} R^2 \\ | \\ R^1 - N^+ - R^3 \\ | \\ R^4 \end{array} \qquad X^-$$

wherein $R^1$, $R^2$, $R^3$ and $R^4$ are independently selected from the group consisting of hydrocarbyl groups of from 1 to 20 carbon atoms, and $X^-$ is selected from the group consisting of perchlorate, tetrafluoroborate, hexafluorophosphate, dithionite, sulfate, phosphate, chloride, bromide, iodide and fluoride.

8. The electrochemical cell as set forth in claim 7 wherein $R^1$, $R^2$, $R^3$ and $R^4$ are independently selected from the group consisting of alkyl groups of from 1 to 10 carbon atoms, and $X^-$ is selected from the group consisting of perchlorate, tetrafluoroborate, hexafluorophosphate, dithionite and sulfate.

9. The electrochemical cell as set forth in claim 6 wherein at least two electrolyte salts are dissolved in said cathode depolarizer and wherein one of said electrolyte salts is a lithium salt and the second is a quaternary ammonium salt.

10. The electrochemical cell as set forth in claim 9 wherein said lithium salt is selected from the group consisting of lithium perchlorate, lithium dithionite, lithium sulfate, lithium tetrafluoroborate, lithium hexafluorophosphate, lithium bromide and lithium chloride.

11. The electrochemical cell as set forth in claim 6 wherein said electrolyte additionally comprises an organic liquid cosolvent for said electrolyte salt, wherein said cosolvent is substantially inert to said cathode depolarizer and said electrode.

12. The electrochemical cell as set forth in claim 1 wherein said cathode comprises carbon.

13. The electrochemical cell as set forth in claim 1 wherein said contact with said agent is effective to remove a minor amount of metal from the electrode surface.

14. The electrochemical cell as set forth in claim 1 wherein said agent additionally comprises a substantially inert diluent.

15. An electrochemical cell comprising in combination:

(a) a cathode;

(b) a nonaqueous, conductive, liquid electrolyte which comprises liquid sulfur dioxide having at least one electrolyte salt dissolved therein which is selected from the group consisting of quaternary ammonium salts, phosphonium salts, pyridinium salts and arsonium salts; and

(c) a solid electrode comprising lithium, said electrode having a surface which has been modified by contact with a liquid agent comprising hexamethylphosphoramide and is performed prior to contacting said electrode with said electrolyte solution.

16. The electrochemical cell as set forth in claim 15 wherein said electrolyte salt comprises a material selected from the group consisting of quaternary ammonium salts and phosphonium salts.

17. The electrochemical cell as set forth in claim 16 wherein said electrolyte salt comprises a quaternary ammonium salt of the formula:

$$\begin{array}{c} R^2 \\ | \\ R^1 - N^+ - R^3 \\ | \\ R^4 \end{array} \qquad X^-$$

wherein $R^1$, $R^2$, $R^3$ and $R^4$ are independently selected from the group consisting of hydrocarbyl groups of from 1 to 20 carbon atoms, and $X^-$ is selected from the group consisting of perchlorate, tetrafluoroborate, hexafluorophosphate, dithionite, sulfate, phosphate, chloride, bromide, iodide and fluoride.

18. The electrochemical cell as set forth in claim 15 wherein at least two electrolyte salts are dissolved in said sulfur dioxide and wherein one of said electrolyte salts is a lithium salt and the second is a quaternary ammonium salt.

19. The electrochemical cell as set forth in claim 18 wherein said lithium salt is selected from the group consisting of lithium perchlorate, lithium dithionite, lithium sulfate, lithium tetrafluoroborate, lithium hexafluorophosphate, lithium bromide and lithium chloride.

20. The electrochemical cell as set forth in claim 15 wherein said cathode comprises carbon.

European Patent Office

**EUROPEAN SEARCH REPORT**

0167279

Application number

EP 85303847.9

**DOCUMENTS CONSIDERED TO BE RELEVANT**

| Category | Citation of document with indication, where appropriate, of relevant passages | Relevant to claim | CLASSIFICATION OF THE APPLICATION (Int Cl 4) |
|---|---|---|---|
| A | US - A - 4 366 616 (CATANZARITE)<br>* Column 1, line 17 - column 2, line 48; especially column 2, lines 40-42 *<br>-- | 1-6,15 | H 01 M 6/14<br>H 01 M 6/16<br>H 01 M 4/40<br>//H 01 M 4/38<br>H 01 M 4/48<br>H 01 M 4/58 |
| D,A | US - A - 3 926 669 (AUBORN)<br>* Claims *<br>-- | 1-4,6, 10,15 | |
| D,A | US - A - 3 567 515 (MARICLE et al.)<br>* Claims; column 4, line 68 - column 5, line 56 *<br>-- | 1-12, 15-20 | |
| D,A | JOURNAL OF THE ELECTROCHEMICAL SOCIETY: SOLIDE STATE SCIENCE, vol. 118, April 1971, Princeton, New Jersey<br>R.N. CASTELLANO et al. "Chemical Polish and Etch for Lithium, Sodium and Potassium" pages 653, 654<br>---- | 1 | **TECHNICAL FIELDS SEARCHED (Int Cl 4)**<br>H 01 M |

The present search report has been drawn up for all claims

| Place of search | Date of completion of the search | Examiner |
|---|---|---|
| VIENNA | 12-09-1985 | LUX |

**CATEGORY OF CITED DOCUMENTS**

X particularly relevant if taken alone
Y particularly relevant if combined with another document of the same category
A technological background
O non-written disclosure
P intermediate document

T : theory or principle underlying the invention
E : earlier patent document, but published on, or after the filing date
D : document cited in the application
L : document cited for other reasons

& : member of the same patent family, corresponding document